# FASCICULE DE BREVET EUROPEEN

(11) **EP 2 986 577 B1**
(45) Date de publication et mention de la délivrance du brevet: **22.01.2020**
(21) Numéro de dépôt: 14722283.0
(22) Date de dépôt: 17.04.2014
(51) Int. Cl.: C03C 17/34, C03C 17/36, B32B 17/10

(54) **VITRAGE DE CONTROLE SOLAIRE COMPRENANT DEUX COUCHES METALLIQUES A BASE DE NICKEL**
SONNENSCHUTZVERGLASUNG MIT ZWEI METALLSCHICHTEN AUS NICKEL
SOLAR CONTROL GLAZING COMPRISING TWO METAL LAYERS MADE FROM NICKEL

(30) Priorité: 19.04.2013 FR 1353589
(43) Date de publication de la demande: 24.02.2016
(73) Titulaire: Saint-Gobain Glass France, 92400 Courbevoie (FR)
(72) Inventeur: SINGH, Laura Jane, F-75011 Paris (FR); PALACIOS-LALOY, Augustin, F-38000 Grenoble (FR); NICOLAS, David, F-75014 Paris (FR)
(74) Mandataire: Saint-Gobain Recherche
(86) Numéro de dépôt international: PCT/FR2014/050937
(87) Numéro de publication internationale: WO 2014/170613

(56) Documents cités:
- US-A- 5 188 887
- US-A- 5 688 585
- US-A- 6 159 607
- US-A1- 2003 031 879
- US-A1- 2004 058 169
- US-A1- 2012 177 899

## Description

L'invention concerne les vitrages isolants dits de contrôle solaire, munis d'empilements de couches minces dites fonctionnelles, c'est-à-dire agissant sur le rayonnement solaire et/ou thermique essentiellement par réflexion et/ou absorption du rayonnement infrarouge proche (solaire) ou lointain (thermique). La présente invention concerne plus particulièrement les vitrages à couches. L'application plus particulièrement visée par l'invention est en premier lieu les vitrages de véhicules, comme les verres latéraux, le toit-auto, la lunette arrière. Sans sortir du cadre de l'invention le présent vitrage peut également être utilisé dans le domaine du bâtiment, en tant que vitrage de contrôle solaire.

On entend par couche "fonctionnelle" ou encore « active », au sens de la présente demande, les couches de l'empilement qui confèrent à l'empilement l'essentiel de ses propriétés d'isolation thermique. Le plus souvent les empilements en couches minces équipant le vitrage lui confèrent des propriétés sensiblement améliorées d'isolation très essentiellement par les propriétés intrinsèques desdites couches actives. Lesdites couches agissent sur le flux de rayonnement infrarouge thermique traversant ledit vitrage, par opposition aux autres couches, généralement en matériau diélectrique et ayant le plus souvent principalement pour fonction une protection chimique ou mécanique desdites couches fonctionnelles.

De tels vitrages munis d'empilements de couches minces agissent sur le rayonnement solaire incident soit essentiellement par l'absorption du rayonnement incident par la ou les couches fonctionnelles, soit essentiellement par réflexion par ces mêmes couches.

Ils sont regroupés sous la désignation de vitrage de contrôle solaire. Ils sont commercialisés et utilisés essentiellement :
- soit pour assurer essentiellement une protection de l'habitacle (automobile) ou de l'habitation du rayonnement solaire et en éviter une surchauffe, de tels vitrages étant qualifiés dans le métier d'antisolaire,
- soit essentiellement pour assurer une isolation thermique de l'habitation et éviter les déperditions de chaleur, ces vitrages étant qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend un vitrage muni d'au moins une couche fonctionnelle lui conférant une déperdition énergétique diminuée, ladite couche présentant des propriétés de réflexion du rayonnement IR compris entre 5 et 50 micromètres. Les couches fonctionnelles utilisés dans cette fonction présentent un coefficient de réflexion du rayonnement IR élevé et sont dites bas-émissives (ou low-e selon le terme anglais).

Dans certains pays, les normes impliquent que les vitrages présentent des propriétés à la fois antisolaire et d'isolation thermique.

De façon bien connue, par exemple décrite dans la publication de référence « Les techniques de l'ingénieur, Vitrage à isolation thermique renforcée, C3635 (2004)», une telle propriété de réflexion est directement fonction de l'émissivité de la face du vitrage munie de l'empilement comprenant la ou les chouches fonctionelles. US-2012177899 décrit des empilements dans lesquels les couches métalliques sont en NiCr, NiCrNx, NbCr, NbCrNx, NbZr, Nb ou NbNx. Les documents US 5188887 US 2004058169 et D4 US2003031879 décrivent un revêtement comprenant deux couches formées essentiellement de nickel (éventuellement nitrure).

D'une manière générale, toutes les caractéristiques lumineuses et thermiques présentées dans la présente description sont obtenues selon les principes et méthodes décrits dans les normes internationales ISO 9050 (2003) et ISO 10292 (1994), se rapportant respectivement à la détermination des caractéristiques lumineuses et énergétiques des vitrages utilisés dans le verre pour la construction.

Un impératif essentiel des empilements est tout d'abord que ceux-ci doivent être capables de subir un traitement thermique sans altération dudit empilement. Par altération, on entend en premier lieu l'apparition de fissurations dans le revêtement. En particulier, il est nécessaire qu'aucune rupture de l'empilement n'apparaisse sur le vitrage lors du traitement thermique ou encore lors du refroidissement (le plus souvent sous forme de trempe) du vitrage. Un traitement thermique au sens de la présente invention inclus notamment, mais pas nécessairement, une mise en forme du vitrage, notamment un bombage de celui-ci, selon les techniques bien connues dans le domaine. L'apparition de fissures est en particulier très préjudiciable à l'aspect esthétique du vitrage et entraîne immédiatement la mise au rebut de celui-ci. En outre, un tel revêtement pourrait également présenter sur la durée des problèmes plus importants de détérioration voire de décollement, notamment sous l'action de l'humidité. De ce fait, il apparaît donc nécessaire de mettre en œuvre des produits dont la résistance à la fissuration est éprouvée et garantie. Selon une autre caractéristique primordiale des vitrages selon l'invention, pour ne pas gêner la vision des passagers vers l'extérieur, ceux-ci doivent présenter une faible réflexion lumineuse interne (c'est-à-dire de la face du vitrage tournée vers l'habitacle), notamment inférieure à 5%, voire inférieure à 4% tout particulièrement pour une application automobile. La transmission lumineuse du vitrage muni de son empilement doit également pouvoir être modulable et relativement élevée, suivant que le vitrage est susceptible d'être utilisé comme toit ouvrant, comme lunette arrière ou encore comme vitre latérale dans un véhicule automobile.

Selon un autre aspect également à prendre en compte dans certaines applications, lorsqu'ils sont associés au substrat verrier, les revêtements doivent en outre également être esthétiquement plaisants, c'est-à-dire que le vitrage muni de son empilement doit présenter une colorimétrie, notamment en transmission et en réflexion interne suffisamment neutre pour ne pas incommoder les utilisateurs, ou alternativement une teinte bleue ou encore verte (pour le bâtiment). Au sens de la présente invention, par couleur neutre ou teinte bleue, on entend plus particulièrement, dans le système de colorimétrie CIE LAB (L*, a*, b*), des valeurs du coefficient b* proches de 0 ou inférieures à 0. En particulier, des valeurs positives du coefficient b* traduisant une coloration jaune du vitrage sont à proscrire, plus particulièrement dans le domaine de l'automobile.

Quelque soit la face du vitrage, cette teinte doit être durable et uniforme sur toute la surface du vitrage, en particulier si l'empilement de couches est soumis à un traitement thermique durant ou après son cycle de fabrication. La résolution d'un tel problème d'une conservation durable de la même colorimétrie sur toute la surface du verre est importante lorsque l'empilement de couches est déposé sur un simple vitrage, notamment sur sa face 2, c'est-à-dire la face destinée à être tournée vers l'intérieur de l'habitacle ou du bâtiment. Impérativement, ces vitrages munis d'empilements fonctionnels doivent ainsi être capables de subir un traitement thermique du type trempe, recuit ou encore bombage, sans variation significative de leurs propriétés optiques et sans dégradation de leurs propriétés d'isolation thermiques initiales. En particulier, après le traitement thermique, les vitrages munis de couches selon l'invention doivent présenter une transmission lumineuse sensiblement constante, présenter une émissivité la plus faible et la plus constante possible et une colorimétrie sensiblement inchangée.

L'objet de la présente invention est de fournir un empilement de couches minces résistant aux fissurations lors des différentes phases d'un traitement thermique qui peut notamment inclure une mise en forme du vitrage (bombage) et dont les qualités ne sont pas dégradées lors dudit traitement, les qualités à préserver étant essentiellement les performances de filtrage du rayonnement solaire (mesurées par le coefficient d'émissivité normale εₙ) et les caractéristiques optiques telles que l'intensité de la transmission lumineuse, la faible réflexion lumineuse ou encore les couleurs. En particulier dans une application bâtiment, l'impératif de la conservation de la couleur est d'autant plus important si, au sein d'une même façade, des vitrages ayant subi un traitement thermique doivent être disposés à proximité de vitrages n'ayant pas subi un tel traitement.

Les empilements les plus performants commercialisés à l'heure actuelle pour résoudre les problèmes précédents incorporent une couche métallique du type Argent fonctionnant essentiellement sur le mode de la réflexion d'une majeure partie du rayonnement IR (infrarouge) incident. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci, pour être protégées de l'humidité. Il n'est ainsi pas possible de déposer de telles couches sur des vitrages simples (aussi appelés monolithiques). Les empilements selon l'invention ne comprennent pas de telles couches du type argent, ou encore du type or ou platine ou encore cuivre. D'une manière plus générale, les empilements selon l'invention ne contiennent pas de tels métaux précieux, ou alors en quantités très négligeables, notamment sous formes d'impuretés inévitables.

D'autres couches métalliques à fonction antisolaire ont également été reportées dans le domaine, comprenant des couches fonctionnelles du type Nb métallique ou nitruré, tel que décrit par exemple dans la demande WO 01/21540. Au sein de telles couches, le rayonnement solaire est absorbé et réfléchi de manière non sélective par la couche fonctionnelle comprenant du niobium. Il est plus particulièrement proposé dans la demande de brevet WO 01/21540 A1 un substrat transparent muni d'un empilement de couches minces constitué d'une couche fonctionnelle en métal (Nb, Ta, Zr) ou en nitrure de ce métal et une surcouche en nitrure ou oxynitrure d'aluminium et/ou nitrure ou oxynitrure de silicium. Cette solution est relativement satisfaisante puisque l'empilement est considéré comme bombable et/ou trempable sans l'apparition de fissurations dans le revêtement. Après le traitement thermique, il apparaît ainsi résistant mécaniquement tout en conservant de bonnes caractéristiques optiques. Cependant, si l'on souhaite obtenir des vitrages dont l'émissivité est plus faible, il est nécessaire d'augmenter l'épaisseur de la couche fonctionnelle, ce qui présente l'inconvénient d'augmenter également la réflexion lumineuse, en particulier à l'intérieur du bâtiment ou de l'automobile. L'empilement de couches minces peut alors réfléchir fortement le rayonnement lumineux provenant de l'intérieur du bâtiment et nuire à la vision vers l'extérieur.

La demande de brevet EP 747 329 A1 décrit des empilements comprenant des couches fonctionnelles à base de nickel. Il est notamment divulgué des empilements de couches comprenant deux couches fonctionnelles (voir en particulier les exemples 18-19 dans le tableau page 10 de cette publication). Les deux couches métalliques sont séparées par une couche de matériau diélectrique en nitrure de silicium, appelée couche intermédiaire, dont il est indiqué que l'épaisseur doit est comprise entre 50 et 120 nm (voir le tableau page 7 de la publication) pour l'obtention des propriétés désirées. Les essais effectués par la demanderesse (et reportés dans la suite de la description) ont cependant démontré que de tels empilements n'étaient pas suffisamment résistants à certains traitements thermiques, notamment ceux exercés dans les conditions les plus sévères, en particulier si le vitrage doit subir une mise en forme tel qu'un bombage.

Les revêtements sont de façon classique déposés par des techniques de dépôt du type pulvérisation sous vide assistée par champ magnétique d'une cathode du matériau ou d'un précurseur du matériau à déposer, souvent appelée technique de pulvérisation magnétron dans le domaine. Une telle technique est aujourd'hui classiquement utilisée notamment lorsque le revêtement à déposer est constitué d'un empilement plus complexe de couches successives d'épaisseurs de quelques nanomètres ou quelques dizaines de nanomètres.

Comme indiqué précédemment, le fait que des couches soient déposées sur le substrat verrier avant son traitement thermique peut entraîner leur détérioration (sous la forme de fissurations) et une modification sensible de leurs propriétés d'isolation thermique et/ou optiques. A contrario, déposer les couches après le traitement thermique du verre s'avère complexe et coûteux. Comme décrit précédemment, il est donc impératif de proposer des vitrages munis d'empilements de couches pouvant subir de tels traitements thermiques sans variation significative de leurs propriétés initiales (mécaniques et optiques). Idéalement et notamment dans le domaine du bâtiment, il est également utile de disposer d'un produit « à tremper » ou « trempable », au choix du client, de telle façon que celui-ci puisse être assuré que les propriétés notamment optiques du vitrage resteront sensiblement les mêmes, que celui-ci doivent subir une trempe pour en améliorer les propriétés mécaniques de résistance aux chocs ou pas. Il est ainsi possible de présenter sur une même façade des vitrages trempés et non trempés, sans que la différence soit perceptible.

Le but de la présente invention est donc la mise au point de nouveaux empilements de couches minces agissant sur le rayonnement solaire en vue de fabriquer des vitrages de contrôle solaire, ayant une aptitude améliorée à supporter les traitements thermiques (notamment du type bombage et/ou trempe) opérés sur le substrat verrier porteur dudit l'empilement.

Plus particulièrement, l'objet de la présente invention est principalement de proposer un vitrage présentant des propriétés antisolaire et/ou d'isolation thermique et qui puisse subir un traitement thermique, notamment du type trempe, sans l'apparition de fissures.

La présente invention se rapporte en premier lieu à un vitrage à propriété de contrôle solaire comprenant au moins un substrat verrier, ledit substrat étant muni d'un empilement de couches, l'empilement comprenant au moins deux couches constituées essentiellement de nickel, éventuellement nitruré. Ledit empilement ne contient pas de couches de métaux précieux, en particulier d'argent ou d'or et chacune desdites au moins deux couches est séparée dans l'empilement de la suivante par une couche intermédiaire d'un matériau diélectrique ou par un ensemble de couches intermédiaires en matériau diélectrique. Selon l'invention, l'épaisseur de la couche intermédiaire ou l'épaisseur cumulée de l'ensemble des couches intermédiaires est comprise entre 5 et 45 nm.

Selon des modes de réalisations préférés de la présente invention, qui peuvent bien évidemment être combinés le cas échéant entre eux :
- L'empilement comprend deux couches constituées essentiellement de nickel, éventuellement nitruré.
- L'épaisseur de la couche intermédiaire ou l'épaisseur cumulée des couches intermédiaires est comprise entre 8 et 40 nm, de préférence l'épaisseur de la couche intermédiaire ou l'épaisseur cumulée des couches intermédiaires est comprise entre 8 et 20 nm.
- Selon une première alternative, lesdites couches sont constituées essentiellement de nickel. Par exemple, lesdites couches sont constituées de nickel et d'impuretés inévitables.
- Selon une autre alternative, les couches sont constituées essentiellement de nickel nitruré, c'est-à-dire que la couche de nickel comprend également des atomes d'azote, dans une proportion cependant limitée, de préférence selon un rapport atomique Ni/N supérieur ou égal à 2 et plus préférentiellement encore selon un rapport atomique Ni/N supérieur ou égal à 3. En particulier selon ce mode, lesdites couches peuvent être constituées uniquement de nickel et d'azote, préférentiellement dans les proportions relatives précédemment décrites, et d'impuretés inévitables.
- L'épaisseur cumulée des couches de nickel (éventuellement nitrurée) est de préférence comprise entre 6 et 60 nm, et de manière très préférée l'épaisseur cumulée des couches de nickel éventuellement nitruré est comprise entre 10 et 40 nm.
- L'empilement comprend en outre au moins une sous couche en matériau diélectrique au contact du substrat et une surcouche en matériau diélectrique, en position la plus externe dans l'empilement, par référence audit substrat.
- Selon un empilement privilégié, le revêtement comprend la succession de couches suivante, à partir de la surface du substrat :
   - au moins une sous-couche en un matériau diélectrique,
   - une première couche constituée de nickel éventuellement nitruré, d'épaisseur physique comprise entre 3 nm et 30 nm, de préférence d'épaisseur physique comprise entre 5 et 20 nm,
   - une couche intermédiaire ou un ensemble de couches intermédiaires, constituée(s) de matériau diélectrique, d'épaisseur cumulée comprise entre 5 et 45 nm,
   - une deuxième couche constituée de nickel éventuellement nitruré, d'épaisseur physique comprise entre 3 nm et 30 nm, de préférence d'épaisseur physique comprise entre 5 et 20 nm,
   - au moins une surcouche en un matériau diélectrique.
- La couche intermédiaire est unique et présente une épaisseur physique comprise entre 5 et 45 nm, de préférence la couche intermédiaire est unique et présente une épaisseur physique comprise entre 8 et 40 nm.
- La couche unique est une couche d'un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium. Au sens de la présente invention on entend par matériau en (ou de) nitrure de silicium, en oxyde d'étain, en oxyde mixte de zinc et d'étain, en oxyde de silicium, en oxyde de titane, en oxynitrure de silicium, un matériau constitué essentiellement d'un tel composé mais pouvant également néanmoins contenir d'autres éléments minoritaires, en particulier en substitution des cations, en particulier pour en favoriser le dépôt sous forme de couches minces par les techniques habituelles de la pulvérisation magnétron. A titre d'exemple, les couches selon la présente invention en nitrure de silicium ou en oxynitrure de silicium, voire en oxyde de silicium, notamment celles déposées par magnétron, comprennent le plus souvent des éléments du type Al, Zr, B, etc., en des proportions pouvant aller par exemple jusqu'à 10% atomique, sur la base de la teneur de la couche en silicium. De même, les couches en oxyde de titane peuvent comprendre en substitution du titane d'autres cations métalliques tels que du zirconium, sans sortir du cadre de la présente invention.
- La surcouche et/ou la sous-couche sont constituées essentiellement dans un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium.
- L'empilement comprend une première surcouche en nitrure de silicium d'épaisseur comprise entre 5 et 150 nm, de préférence entre 30 et 70 nm, de nitrure de silicium, et une deuxième surcouche au-dessus de la première, d'épaisseur comprise entre 1 et 10 nm, choisi parmi un oxyde d'étain, un oxyde mixte de zinc ou d'étain, un oxyde de silicium, un oxyde de titane, un oxynitrure de silicium.
- L'empilement comprend la succession des couches suivantes, à partir de la surface du substrat :
   - une sous-couche d'épaisseur comprise entre 20 et 60 nm de nitrure de silicium,
   - une première couche constituée essentiellement de nickel, éventuellement nitruré, d'épaisseur physique comprise entre 3 nm et 30 nm, de préférence d'épaisseur physique comprise entre 5 et 20 nm,
   - une couche intermédiaire ou un ensemble de couche intermédiaire d'épaisseur cumulée comprise entre 5 et 45 nm, dont au moins une couche d'un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium, de préférence une couche intermédiaire unique de nitrure de silicium,
   - une deuxième couche constituée essentiellement de nickel, éventuellement nitruré, d'épaisseur physique comprise entre 3 nm et 30 nm, de préférence d'épaisseur physique comprise entre 5 et 20 nm,
   - une surcouche d'épaisseur comprise entre 5 et 150 nm, de préférence entre 30 et 70 nm, de nitrure de silicium.
- L'empilement comprend en outre des couches métalliques protectrices des couches de nickel éventuellement nitruré, en particulier choisi dans le groupe constitué par Ti, Mo, Al ou d'un alliage comprenant au moins l'un de ces éléments, lesdites couches étant disposées au contact et au-dessus et au-dessous des couches constituée essentiellement de nickel, éventuellement nitruré, chaque couche métallique protectrice ayant une épaisseur physique inférieure à 2 nm.

Le vitrage selon l'invention peut être un vitrage simple dans lequel l'empilement de couches minces étant disposé en face 2 du vitrage simple en numérotant les faces du substrat de l'extérieur vers l'intérieur du bâtiment ou de l'habitacle qu'il équipe.

Selon une autre réalisation, notamment pour une utilisation dans le domaine automobile, le vitrage selon l'invention peut-être un vitrage feuilleté, comprenant deux substrats verriers assemblés par un feuillet thermoplastique, ledit vitrage étant muni d'un empilement de couches tel que décrit précédemment sur la face du substrat tournée vers l'intérieur du bâtiment ou de l'habitacle qu'il équipe.

L'invention se rapporte également à un vitrage tel que précédemment décrit, du type trempé thermiquement et/ou bombé.

Enfin l'invention se rapporte également à l'empilement de couches tel que décrit précédemment.

En particulier, dans un tel empilement (ou vitrage), toutes les couches fonctionnelles, au sens précédemment décrit, sont constituées essentiellement de nickel éventuellement nitruré, tel que décrit précédemment.

Un procédé de fabrication d'un tel vitrage comprend par exemple au moins les étapes suivantes :
- on introduit un substrat verrier dans un dispositif de pulvérisation cathodique,
- dans un premier compartiment on dépose au moins une sous-couche d'un matériau diélectrique,
- dans un compartiment ultérieur, on pulvérise une cible en nickel au moyen d'un plasma généré à partir d'un gaz neutre tel que l'argon, comprenant éventuellement de l'azote,
- dans un compartiment ultérieur on dépose au moins une couche intermédiaire d'un matériau diélectrique,
- dans un compartiment ultérieur, on pulvérise une cible en nickel au moyen d'un plasma généré à partir d'un gaz neutre tel que l'argon, comprenant éventuellement de l'azote,
- dans un compartiment ultérieur, on dépose au moins une surcouche d'un matériau diélectrique.

Par les termes «sous-couche» et «sur-couche», il est fait référence dans la présente description à la position respective desdites couches par rapport à la ou les couches fonctionnelles dans l'empilement, ledit empilement étant supporté par le substrat verrier.

En particulier, lorsque l'empilement contient une sous couche unique et une surcouche unique, la sous-couche est la couche au contact du substrat verrier et la surcouche est la couche la plus externe de l'empilement, tournée à l'opposé du substrat.

Par le terme «couche intermédiaire», on désigne la ou les couches disposées entre deux couches fonctionnelles (nickel éventuellement nitrurée).

Par épaisseur physique (ou géométrique) d'une couche, on entend au sens de la présente invention l'épaisseur réelle de la couche, telle qu'elle peut être mesurée notamment par les techniques classique de microscopie électronique.

L'invention et ses avantages sont décrits avec plus de détails, ci-après, au moyen des exemples non limitatifs ci-dessous, selon l'invention et comparatifs. Dans tous les exemples et la description, à moins qu'autrement spécifié, les épaisseurs données sont physiques.

Tous les substrats sont en verre clair de 2 mm d'épaisseur de type Planilux commercialisé par la société Saint-Gobain Glass France.

Toutes les couches sont déposées de façon connue par pulvérisation cathodique assistée par champ magnétique (souvent appelé magnétron).

De façon bien connue, les différentes couches successives sont déposées dans les compartiments successifs du dispositif de pulvérisation cathodique, chaque compartiment étant muni d'une cible métallique spécifique en Si, Ni, choisie pour le dépôt d'une couche spécifique de l'empilement.

Plus précisément, les couches en nitrure de silicium sont déposées dans un premier compartiment du dispositif à partir d'une cible de silicium métallique (dopé avec 8% en masse d'aluminium), dans une atmosphère réactive contenant de l'azote. Les couches en nitrure de silicium contiennent donc également de l'aluminium.

Dans les exemples qui suivent, le substrat verrier a ainsi été recouvert successivement d'un empilement de couches comprenant deux couches fonctionnelles en Ni et des sous-couche, sur-couche et couche intermédiaire en nitrure de silicium (noté par commodité Si₃N₄ par la suite même si la stoechiométrie réelle de la couche n'est pas forcément celle-ci).

### Exemple 1 (selon l'invention):

Les conditions de dépôts ont été ajustées selon les techniques classiques pour un dépôt magnétron (par exemple du type de celles décrites dans la demande EP 0 747 329 A1) pour l'obtention d'un empilement répondant à la séquence suivante :

| Substrat verre / | Si₃N₄ / | Ni / | Si₃N₄ / | Ni / | Si₃N₄ |
|---|---|---|---|---|---|
| (Epaisseur) | 30 nm | 8 nm | 10 nm | 7nm | 55 nm |

Pour le dépôt des couches en nickel, la pression totale du gaz (argon) est fixée à 3 µbars dans le compartiment de dépôt, la puissance appliquée sur la cible de nickel métallique étant de l'ordre de 500 watts. Pour le dépôt des couches en nitrure de silicium, la pression totale du gaz (50% Ar, 50% N₂ en volume) est fixée à 1,5 µbars dans le compartiment de dépôt, la puissance appliquée sur la cible de nickel métallique étant de l'ordre de 2000 watts.

Le vitrage subit ensuite un traitement thermique consistant en un chauffage à 650°C pendant 8 minutes suivi d'une trempe.

### A- Mesure des caractéristiques des vitrages avant et après le traitement thermique

Les caractéristiques thermique, optique et colorimétrique des vitrages ont été mesurées selon les principes et normes suivantes :

### 1°) Propriétés optiques et colorimétriques :

Les mesures sont effectuées conformément à la norme européenne ISO 9050 (2003).

Plus précisément :
- la transmission lumineuse T_{L} et la réflexion lumineuse interne R_{Lint} est mesurée selon l'illuminant D₆₅,
- la couleur est mesurée sur le vitrage monolithique, selon les coordonnées colorimétriques a*, b* en en transmission selon le modèle de colorimétrie (L, a*, b*), soit en transmission, soit en réflexion interne.

### 2°) Propriétés thermiques :

Les propriétés d'isolation thermique du vitrage sont évaluées par la détermination de l'émissivité à incidence normale εₙ mesurée sur la face intérieure du substrat recouverte de l'empilement de couches, selon les conditions décrites dans la norme ISO 10292 (1994), annexe A.

Les valeurs de transmission lumineuse T_{L}, de réflexion R_{Lint}, les coefficients colorimétriques a*, b*, et l'émissivité normale εₙ (en pourcentages) sont mesurées pour le vitrage muni de l'empilement d'abord en sortie de la ligne magnétron puis après le traitement thermique consistant en un chauffage à 620°C pendant 10 minutes suivi d'une trempe.

### B- Résultats

Les résultats obtenus pour le vitrage selon l'exemple 1 sont regroupés dans le tableau 1 qui suit :

**Tableau 1**

| **Avant trempe** | | | | | **Après trempe** | | | | |
|---|---|---|---|---|---|---|---|---|---|
| R_{L} | T_{L} | a*_{T} | b*_{T} | εₙ | R_{L} | T_{L} | a*_{T} | b*_{T} | εₙ |
| 3,2 | 32 | -3,7 | 0,2 | 21 | 3,9 | 31 | -3,7 | -0,8 | 16 |

Les données reportées dans le tableau 1 montrent que le vitrage selon l'exemple 1 présente une diminution de l'émissivité normale après avoir subi le traitement thermique. En outre, le vitrage selon l'invention se caractérise par une émissivité relativement faible tout en conservant une transmission lumineuse relativement élevée, la réflexion lumineuse demeurant sensiblement égale ou légèrement supérieure à celle du verre nu.
Les données reportées dans le tableau 1 indiquent également la colorimétrie des vitrages munis des empilements selon l'invention : Les paramètres a*_{T} et b*_{T} selon l'exemple 1 sont relativement faibles. De telles propriétés colorimétriques entraînent une couleur neutre ou bleue-verte peu intense des vitrages, telle qu'actuellement recherchée dans le domaine du bâtiment. Le coefficient mesuré en réflexion interne (coté couche) est égal à b*_{RLint}= -33, ce qui confère au vitrage une coloration également bleue en réflexion à l'intérieur de l'habitacle, très recherchée dans les vitrages automobiles.

### Exemple 2 à 5 :

Dans ces exemples, on dépose, sur le même substrat verrier que celui utilisé pour l'exemple 1 et selon les mêmes techniques, différents empilements dont la constitution est identique, excepté l'épaisseur (noté X) de la couche intermédiaire.
Plus précisément, tous les empilements répondent à la séquence suivante :

| Substrat verre / | Si₃N₄ / | Ni / | Si₃N₄ / | Ni / | Si₃N₄ |
|---|---|---|---|---|---|
| (Epaisseur) | 30 nm | 8 nm | **X** nm | 7nm | 55 nm |

Le tableau 2 ci-dessous indique pour chaque exemple l'épaisseur **X** de la couche intermédiaire de nitrure de silicium :

**Tableau 2**

| Exemple | 2 | 3 | 4 | 5 |
|---|---|---|---|---|
| Epaisseur X (nm) | 10 | 30 | 50 | 80 |
| Résistance à la fissuration | + | = | - | -- |

Les exemples 2 et 3 sont conformes à l'objet de la présente invention, les vitrages selon les exemples 4 et 5 sont comparatifs.

Les vitrages munis des empilements selon les exemples 2 à 5 sont soumis à un traitement de bombage dont les caractéristiques sont données ci-après :
Le vitrage est chauffé pendant 7 minutes à 650°C et un bombage gravitationnel est opéré sur le vitrage (empilement vers le bas).

Les vitrages sont inspectés visuellement et au microscope optique après le traitement de bombage et le nombre de fissures est comptabilisé sur la portion centrale du vitrage soumise aux plus fortes sollicitations mécaniques.

Les résultats sont reportés dans le tableau 2 précédent dans lequel :
- le signe (+) indique l'absence de fissurations observables sur l'échantillon,
- le signe (=) indique la présence de quelques fissurations superficielles uniquement observables au microscope optique sur l'échantillon,
- le signe (-) indique la présence de fissurations observables au microscope optique et de quelques fissurations visibles à l'œil nu sur l'échantillon,
- le signe (--) indique la présence de fissurations profondes visibles à l'œil nu sur l'échantillon.
On voit dans le tableau 2 que le degré de fissuration observé dans les revêtements est clairement fonction de l'épaisseur de la couche intermédiaire présente entre deux couches fonctionnelles. La résistance à la fissuration de l'empilement apparaît inversement proportionnelle à l'épaisseur de ladite couche. Un tel résultat apparaît inattendu, notamment au vu de l'enseignement décrit dans la demande EP 747329 A1 cité précédemment.
On a également mesuré sur les vitrages des exemples 2 et 5 le coefficient b*_{RLint} en réflexion interne (coté couche) pour évaluer la colorimétrie perçue du vitrage, coté habitacle. Il est égal à b*_{RLint}= -27 pour le vitrage selon l'exemple 2 selon l'invention, ce qui confère au vitrage coté couche la coloration bleue recherchée dans les vitrages automobiles. Il est égal à b*_{RLint}= +7 pour le vitrage selon l'exemple 5 comparatif, ce qui confère au vitrage coté couche cette fois une coloration jaune indésirable.

## Revendications

1. Vitrage à propriété de contrôle solaire comprenant au moins un substrat verrier muni d'un empilement de couches, ledit vitrage **se caractérisant en ce que** l'empilement comprend au moins deux couches constituées essentiellement de nickel éventuellement nitruré, ledit empilement ne contenant pas de couches de métaux précieux, en particulier d'argent ou d'or, dans lequel chacune desdites couches est séparée dans l'empilement de la suivante par une couche intermédiaire d'un matériau diélectrique ou par un ensemble de couches intermédiaires en matériau diélectrique, l'épaisseur de la couche intermédiaire ou l'épaisseur cumulée de l'ensemble des couches intermédiaires étant comprise entre 5 et 45 nm.

2. Vitrage selon la revendication 1, dans lequel l'épaisseur de la couche intermédiaire ou l'épaisseur cumulée des couches intermédiaires est comprise entre 8 et 40 nm, de préférence est comprise entre 8 et 20 nm.

3. Vitrage selon l'une des revendications précédentes, dans lequel lesdites au moins deux couches sont constituées essentiellement de nickel.

4. Vitrage selon l'une des revendications 1 ou 2, dans lequel lesdites au moins deux couches sont constituées essentiellement de nickel et d'azote, le rapport Ni/N dans lesdites couches étant supérieur ou égal à 2.

5. Vitrage selon l'une des revendications 1 ou 2, dans lequel lesdites au moins deux couches sont constituées essentiellement de nickel et d'azote, le rapport Ni/N dans lesdites couches étant supérieur ou égal à 3.

6. Vitrage selon l'une des revendications précédentes dans lequel l'épaisseur cumulée des couches constituées essentiellement de nickel éventuellement nitruré est comprise entre 6 et 60 nm, de préférence entre 10 et 40 nm.

7. Vitrage selon l'une des revendications précédentes dans lequel l'empilement comprend en outre au moins une sous couche en matériau diélectrique au contact du substrat et une surcouche en matériau diélectrique, en position la plus externe dans l'empilement, par référence audit substrat.

8. Vitrage selon l'une des revendications précédentes, dans lequel ledit revêtement comprend la succession de couches suivante, à partir de la surface du substrat :
- au moins une sous-couche en un matériau diélectrique,
- une première couche constituée essentiellement de nickel éventuellement nitruré, d'épaisseur physique comprise entre 3 nm et 30 nm,
- une couche intermédiaire d'épaisseur comprise entre 5 et 45 nm ou un ensemble de couches intermédiaires, constituée(s) de matériau diélectrique, d'épaisseur cumulée comprise entre 5 et 45 nm,
- une deuxième couche constituée essentiellement de nickel éventuellement nitruré, d'épaisseur physique comprise entre 3 nm et 30 nm,
- au moins une surcouche en un matériau diélectrique.

9. Vitrage selon l'une des revendications précédentes, dans lequel la couche intermédiaire est unique et présente une épaisseur physique comprise entre 5 et 45 nm, de préférence une épaisseur physique comprise entre 8 et 40 nm.

10. Vitrage selon l'une des revendications précédentes, dans lequel la ou les couches intermédiaires sont en un matériau choisi parmi un nitrure de silicium, un nitrure d'aluminium, un oxyde d'étain, un oxyde mixte de zinc et d'étain, un oxyde de silicium, un oxyde de titane, un oxynitrure de silicium.

11. Vitrage selon l'une des revendications précédentes, dans lequel la surcouche et/ou la sous-couche sont constituées essentiellement dans un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium.

12. Vitrage selon l'une des revendications précédentes, dans lequel l'empilement comprend la succession des couches suivantes, à partir de la surface du substrat :
- une sous-couche d'épaisseur comprise entre 20 et 60 nm de nitrure de silicium,
- une première couche constituée essentiellement de nickel éventuellement nitruré, d'épaisseur physique comprise entre 3 nm et 30 nm, de préférence d'épaisseur physique comprise entre 5 et 20 nm,
- une couche intermédiaire ou un ensemble de couches intermédiaires d'épaisseur cumulée comprise entre 5 et 45 nm, dont au moins une couche d'un matériau choisi parmi un nitrure de silicium, un nitrure d'aluminium, un oxyde d'étain, un oxyde mixte de zinc ou d'étain, un oxyde de silicium, un oxyde de titane, un oxynitrure de silicium, de préférence une couche intermédiaire unique en nitrure de silicium,
- une deuxième couche constituée essentiellement de nickel éventuellement nitruré, d'épaisseur physique comprise entre 3 nm et 30 nm, de préférence d'épaisseur physique comprise entre 5 et 20 nm,
- une sur-couche d'épaisseur comprise entre 5 et 150 nm de nitrure de silicium.

13. Vitrage selon l'une des revendications précédentes dans lequel l'empilement comprend en outre des couches métalliques protectrices des couches de nickel éventuellement nitruré, en particulier choisi dans le groupe constitué par Ti, Mo, Al ou d'un alliage comprenant au moins l'un de ces éléments, lesdites couches étant disposées au contact et au-dessus et au-dessous des couches constituée essentiellement de nickel éventuellement nitruré, chaque couche métallique protectrice ayant une épaisseur physique inférieure à 2 nm.

14. Vitrage simple selon l'une des revendications précédentes, l'empilement de couches minces étant disposé en face 2 du vitrage simple en numérotant les faces du substrat de l'extérieur vers l'intérieur du bâtiment ou de l'habitacle qu'il équipe.

15. Vitrage feuilleté selon l'une des revendications 1 à 13, comprenant deux substrats verriers assemblés par un feuillet thermoplastique, ledit vitrage étant muni dudit empilement de couches sur la face du substrat tournée vers l'intérieur du bâtiment ou de l'habitacle qu'il équipe.

16. Vitrage selon l'une des revendications précédentes, **caractérisé en ce qu'**il est trempé thermiquement et/ou bombé.

17. Empilement de couches tel que décrit dans l'une des revendications 1 à 13.

## Patentansprüche

1. Verglasung mit Sonnenschutzeigenschaft, umfassend mindestens ein Glassubstrat, das mit einem Schichtstapel versehen ist, wobei die Verglasung **dadurch gekennzeichnet ist, dass** der Stapel mindestens zwei Schichten umfasst, die im Wesentlichen aus gegebenenfalls nitriertem Nickel bestehen, wobei der Stapel keine Schichten aus Edelmetallen, insbesondere aus Silber oder Gold, enthält, wobei jede der Schichten im Stapel von der folgenden durch eine Zwischenschicht aus einem dielektrischen Material oder durch eine Anordnung von Zwischenschichten aus dielektrischem Material getrennt ist, wobei die Dicke der Zwischenschicht oder die Gesamtdicke der Anordnung von Zwischenschichten zwischen 5 und 45 nm liegt.

2. Verglasung nach Anspruch 1, wobei die Dicke der Zwischenschicht oder die Gesamtdicke der Zwischenschichten zwischen 8 und 40 nm, bevorzugt zwischen 8 und 20 nm liegt.

3. Verglasung nach einem der vorhergehenden Ansprüche, wobei die mindestens zwei Schichten im Wesentlichen aus Nickel bestehen.

4. Verglasung nach einem der Ansprüche 1 oder 2, wobei die mindestens zwei Schichten im Wesentlichen aus Nickel und Stickstoff bestehen, wobei das Verhältnis Ni/N in den Schichten größer als oder gleich 2 ist.

5. Verglasung nach einem der Ansprüche 1 oder 2, wobei die mindestens zwei Schichten im Wesentlichen aus Nickel und Stickstoff bestehen, wobei das Verhältnis Ni/N in den Schichten größer als oder gleich 3 ist.

6. Verglasung nach einem der vorhergehenden Ansprüche, wobei die Gesamtdicke der im Wesentlichen aus gegebenenfalls nitriertem Nickel bestehenden Schichten zwischen 6 und 60 nm, bevorzugt zwischen 10 und 40 nm liegt.

7. Verglasung nach einem der vorhergehenden Ansprüche, wobei der Stapel ferner mindestens eine Unterschicht aus dielektrischem Material in Kontakt mit dem Substrat und eine Deckschicht aus dielektrischem Material an der in Bezug auf das Substrat am weitesten außen liegenden Position des Stapels umfasst.

8. Verglasung nach einem der vorhergehenden Ansprüche, wobei die Beschichtung ausgehend von der Oberfläche des Substrats die folgende Schichtfolge umfasst:
- mindestens eine Unterschicht aus einem dielektrischen Material,
- eine erste Schicht, die im Wesentlichen aus gegebenenfalls nitriertem Nickel besteht, mit einer physikalischen Dicke zwischen 3 nm und 30 nm,
- eine Zwischenschicht mit einer Dicke zwischen 5 und 45 nm oder eine Anordnung von Zwischenschichten, die aus dielektrischem Material besteht/bestehen, mit einer Gesamtdicke zwischen 5 und 45 nm,
- eine zweite Schicht, die im Wesentlichen aus gegebenenfalls nitriertem Nickel besteht, mit einer physikalischen Dicke zwischen 3 nm und 30 nm,
- mindestens eine Deckschicht aus einem dielektrischen Material.

9. Verglasung nach einem der vorhergehenden Ansprüche, wobei die Zwischenschicht die einzige ist und eine physikalische Dicke zwischen 5 und 45 nm, bevorzugt eine physikalische Dicke zwischen 8 und 40 nm aufweist.

10. Verglasung nach einem der vorhergehenden Ansprüche, bei der die Zwischenschicht oder die Zwischenschichten aus einem Material sind, das unter Siliciumnitrid, Aluminiumnitrid, Zinnoxid, einem Mischoxid von Zink und Zinn, Siliciumoxid, Titanoxid, Siliciumoxinitrid gewählt ist.

11. Verglasung nach einem der vorhergehenden Ansprüche, wobei die Deckschicht und/oder die Unterschicht im Wesentlichen aus einem Material bestehen, das unter Siliciumnitrid, Aluminiumnitrid, Zinnoxid, einem Mischoxid von Zink oder Zinn, Siliciumoxid, Titanoxid, Siliciumoxinitrid gewählt ist.

12. Verglasung nach einem der vorhergehenden Ansprüche, wobei der Stapel ausgehend von der Oberfläche des Substrats die folgende Schichtfolge umfasst:
- eine Unterschicht mit einer Dicke zwischen 20 und 60 nm aus Siliciumnitrid,
- eine erste Schicht, die im Wesentlichen aus gegebenenfalls nitriertem Nickel besteht, mit einer physikalischen Dicke zwischen 3 nm und 30 nm, bevorzugt mit einer physikalischen Dicke zwischen 5 nm und 20 nm,
- eine Zwischenschicht oder eine Anordnung von Zwischenschichten mit einer Gesamtdicke zwischen 5 und 45 nm, darunter mindestens eine Schicht aus einem Material, das unter Siliciumnitrid, Aluminiumnitrid, Zinnoxid, einem Mischoxid von Zink oder Zinn, Siliciumoxid, Titanoxid, Siliciumoxinitrid gewählt ist, bevorzugt eine einzige Zwischenschicht aus Siliciumnitrid,
- eine zweite Schicht, die im Wesentlichen aus gegebenenfalls nitriertem Nickel besteht, mit einer physikalischen Dicke zwischen 3 nm und 30 nm, bevorzugt mit einer physikalischen Dicke zwischen 5 und 20 nm,
- eine Deckschicht mit einer Dicke zwischen 5 und 150 nm aus Siliciumnitrid.

13. Verglasung nach einem der vorhergehenden Ansprüche, wobei der Stapel ferner metallische Schutzschichten für die Schichten aus gegebenenfalls nitriertem Nickel umfasst, die insbesondere aus der Gruppe gewählt sind, die aus Ti, Mo, Al oder einer Legierung mit mindestens einem dieser Elemente besteht, wobei die Schichten in Kontakt mit und über und unter den Schichten angeordnet sind, die im Wesentlichen aus gegebenenfalls nitriertem Nickel bestehen, wobei jede metallische Schutzschicht eine physikalische Dicke von weniger als 2 nm aufweist.

14. Einfachverglasung nach einem der vorhergehenden Ansprüche, wobei der Dünnschichtstapel auf Seite 2 der Einfachverglasung angeordnet ist, wobei die Seiten des Substrats von außen nach innen des damit ausgestatteten Gebäudes oder Fahrgastraums nummeriert sind.

15. Verbundverglasung nach einem der Ansprüche 1 bis 13, umfassend zwei Glassubstrate, die mit einer thermoplastischen Folie verbunden sind, wobei die Verglasung mit dem Schichtstapel auf der dem Innenraum des damit ausgestatteten Gebäudes oder Fahrgastraums zugewandten Seite des Substrats versehen ist.

16. Verglasung nach einem der vorhergehenden Ansprüche, **dadurch gekennzeichnet, dass** sie thermisch vorgespannt und/oder gebogen ist.

17. Schichtstapel nach einem der Ansprüche 1 bis 13.

## Claims

1. A glazing unit with a solar control property comprising at least one glass substrate provided with a stack of layers, said glazing unit being **characterized in that** the stack comprises at least two layers essentially consisting of optionally nitrided nickel, said stack containing no layers of precious metals, in particular of silver or of gold, wherein each of said metal layers is separated in the stack from the following one by an intermediate layer of a dielectric material or by a set of intermediate layers made of dielectric material, the thickness of the intermediate layer or the thickness of the set of intermediate layers being between 5 and 45 nm.

2. The glazing unit as claimed in claim 1, wherein the thickness of the intermediate layer or the combined thickness of the intermediate layers is between 8 and 40 nm, preferably between 8 and 20 nm.

3. The glazing unit as claimed in either of the preceding claims, wherein said at least two layers essentially consist of nickel.

4. The glazing unit as claimed in either of claims 1 and 2, wherein said at least two layers essentially consist of nickel and nitrogen, the Ni/N ratio in said layers being greater than or equal to 2.

5. The glazing unit as claimed in either of claims 1 and 2, wherein said at least two layers essentially consist of nickel and nitrogen, the Ni/N ratio in said layers being greater than or equal to 3.

6. The glazing unit as claimed in one of the preceding claims, wherein the combined thickness of the layers essentially consisting of optionally nitrided nickel is between 6 and 60 nm, preferably between 10 and 40 nm.

7. The glazing unit as claimed in one of the preceding claims, wherein the stack additionally comprises at least one underlayer made of dielectric material in contact with the substrate and one overlayer made of dielectric material, in the outermost position in the stack, with reference to said substrate.

8. The glazing unit as claimed in one of the preceding claims, wherein said coating comprises the following sequence of layers, starting from the surface of the substrate:
- at least one underlayer made of a dielectric material,
- a first layer essentially consisting of optionally nitrided nickel, having a physical thickness of between 3 nm and 30 nm,
- an intermediate layer having a thickness of between 5 and 45 nm or a set of intermediate layers, consisting of dielectric material, having a combined thickness of between 5 and 45 nm,
- a second layer essentially consisting of optionally nitrided nickel, having a physical thickness of between 3 nm and 30 nm,
- at least one overlayer made of a dielectric material.

9. The glazing unit as claimed in one of the preceding claims, wherein the intermediate layer is the sole one and has a physical thickness of between 5 and 45 nm, preferably a physical thickness of between 8 and 40 nm.

10. The glazing unit as claimed in one of the preceding claims, wherein the intermediate layer(s) is (are) made of a material selected from a silicon nitride, an aluminum nitride, a tin oxide, a mixed oxide of zinc and tin, a silicon oxide, a titanium oxide and a silicon oxynitride.

11. The glazing unit as claimed in one of the preceding claims, wherein the overlayer and/or the underlayer essentially consist of a material selected from a silicon nitride, an aluminum nitride, a tin oxide, a mixed oxide of zinc or tin, a silicon oxide, a titanium oxide and a silicon oxynitride.

12. The glazing unit as claimed in one of the preceding claims, wherein the stack comprises the sequence of the following layers, starting from the surface of the substrate:
- an underlayer having a thickness of between 20 and 60 nm of silicon nitride,
- a first layer essentially consisting of optionally nitrided nickel, having a physical thickness of between 3 nm and 30 nm, preferably having a physical thickness of between 5 and 20 nm,
- an intermediate layer or a set of intermediate layers having a combined thickness of between 5 and 45 nm, including at least one layer of a material selected from a silicon nitride, an aluminum nitride, a tin oxide, a mixed oxide of zinc or tin, a silicon oxide, a titanium oxide and a silicon oxynitride, preferably a sole intermediate layer made of silicon nitride,
- a second layer essentially consisting of optionally nitrided nickel, having a physical thickness of between 3 nm and 30 nm, preferably having a physical thickness of between 5 and 20 nm,
- an overlayer having a thickness of between 5 and 150 nm of silicon nitride.

13. The glazing unit as claimed in one of the preceding claims, wherein the stack additionally comprises protective metal layers for protecting the optionally nitrided nickel layers, in particular selected from the group consisting of Ti, Mo, Al or an alloy comprising at least one of these elements, said layers being positioned in contact with and on top of and underneath layers essentially consisting of optionally nitrided nickel, each protective metal layer having a physical thickness of less than 2 nm.

14. A single glazing unit as claimed in one of the preceding claims, the stack of thin layers being deposited on face 2 of the single glazing unit when numbering the faces of the substrate from the outside to the inside of the building or of the passenger compartment that it equips.

15. A laminated glazing unit as claimed in one of claims 1 to 13, comprising two glass substrates assembled via a thermoplastic sheet, said glazing unit being provided with said stack of layers on the face of the substrate turned toward the inside of the building or of the passenger compartment that it equips.

16. The glazing unit as claimed in one of the preceding claims, **characterized in that** it is thermally toughened and/or curved.

17. A stack of layers as described in one of claims 1 to 13.
